# EUROPEAN PATENT SPECIFICATION

(11) **EP 0 665 620 B1**
(45) Date of publication and mention of the grant of the patent: **08.09.1999**
(21) Application number: 94118773.4
(22) Date of filing: 29.11.1994
(51) Int. Cl.: H02B 1/28

(54) **Enclosure for electric material**
Umhüllung einer unter Spannung stehenden elektrischen Ausrüstung
Enveloppe pour équipement électrique en charge

(30) Priority: 03.12.1993 SE 9304022
(43) Date of publication of application: 02.08.1995
(73) Proprietor: ASEA BROWN BOVERI AB, 721 83 Västeras (SE)
(72) Inventor: Kalevi Herold,, S-735 38 Surahammar (SV)
(74) Representative: Boecker, Joachim, Dr.-Ing.

(56) References cited:
- US-A- 4 018 982
- US-A- 4 335 271
- US-A- 4 366 343

## Description

### TECHNICAL FIELD

The invention relates to an enclosure for live electric material according to the precharacterising part of claim 1. Enclosures of this kind are used in many different locations in electric plants for accommodating apparatus and other equipment for, for example, operation, indication, measurement, protection and control.

### STATE OF THE ART

The object of enclosures for electric material is to protect people and animals from coming into contact with live parts as well as to protect the enclosed apparatus or equipment against external harmful influences, such as water or dust.

Different environments impose different demands on the enclosure and, therefore, different designs have become standardized, so-called enclosure classes. Swedish standard for enclosure classes is SS-EN 60529. The designation for an enclosure class are the letters IP followed by two figures. The first figure denotes the degree of protection against penetration of solid, extraneous objects, and the second figure denotes the degree of protection against water. The designation IP 20, for example,means that live parts cannot be touched with a standardized test finger, but there is no protection against water. The test finger mainly consists of a metallic, 80 mm long, two-joint front part with a circular cross section with a diameter of 12 mm, and of an electrically insulating, 100 mm long rear part with a substantially rectangular cross section of a dimension of 50 x 20 mm, as well as a circular stop plate on the back with a diameter of 75 mm.

The entry of cables into an electric apparatus cubicle normally takes place through knock-out openings punched out in advance, or through fittings which at the same time provide for tensile strain relief of the cable. The drawbacks of the first solution are several: The punching operation is expensive and time-consuming. The breaking up of the openings demands a great deal of work, often deforms the panel, and leaves sharp edges which may damage the cable. If the knock-out opening is incorrectly made, or the holes are too large, the opening has to be sealed. The second solution entails a plurality of parts and the actual assembly is time-consuming.

The US-A-43 35 271 refers to a box with five walls and one open side. The box has an opening to introduce a cable which is then connected to an outlet or a switch which has to be mounted on the open side of the box. In order to form the box from plastic material and in one piece integral with a clamping device for the incoming cable one edge of the box is provided with an opening for the cable into a tunnel which is formed by the two adjacent rectangular side walls and two additional inner walls close to this corner of the box. One of the outer side walls in this corner is provided with an arcuate inwardly extending hinged flap that closes the passage way formed by the tunnel. When a cable is inserted this flap is resiliently bent back allowing easy insertion of the cable. When an outpulling force is exerted on the cable the resilient arcuatly shaped flap clamps the cable against one of said inner walls thus preventing the withdrawal of the cable.

### SUMMARY OF THE INVENTION

The invention aims at providing a semi-protecting enclosure for live electric material of the above-mentioned kind which enclosure is suited for rational manufacture and which makes it possible for incoming and outgoing cables to be connected in a simple manner without the above-mentioned drawbacks associated with prior art enclosure designs.

To achieve this aim the invention suggests an enclosure for live electric material according to the introductory part of claim 1, which is characterized by the features of the characterizing part of claim 1.

Further developments of the invention are characterized by the features of the additional claims.

According to the invention, at least one of the end or side panels of the enclosure is provided with a folded-in edge portion, at a distance from the mounting surface, such that a gap- or tunnel-like cable inlet opening is formed between the mentioned edge portion and the mounting surface which, for example, may consist of a wall. The width of the tunnel may be made arbitrary and comprise a whole end or side panel. The length and height of the tunnel are adjusted according to the largest cable dimension and such that the above-mentioned test finger is prevented from coming into contact with any live part. The enclosure may be supplemented by a rear panel, the edge of which may be bent so that it forms, together with the other part of the enclosure, a labyrinth-shaped and water-repellent cable inlet opening. In a further developed form, the opening may be provided with means for relieving the tensile strain and be sealed against dust.

### BRIEF DESCRIPTION OF THE DRAWINGS

The invention will be explained in greater detail by description of two embodiments with reference to the accompanying drawings, wherein
- Figure 1: shows in perspective view a first embodiment of an enclosure according to the invention, wherein parts of the upper end and front panels of the enclosure have been cut away to show the design more clearly,
- Figure 2: shows in front view a similar enclosure as Figure 1 with cables extended thereto,
- Figure 3: shows vertical section along the line III-III in Figure 2,
- Figure 4: shows an end view from below of the enclosure of Figure 2,
- Figure 5: shows an enlargement of the upper part of Figure 3,
- Figure 6: shows how the cable inlet is arranged in a second embodiment of an enclosure according to the invention.

### DESCRIPTION OF THE PREFERRED EMBODIMENTS

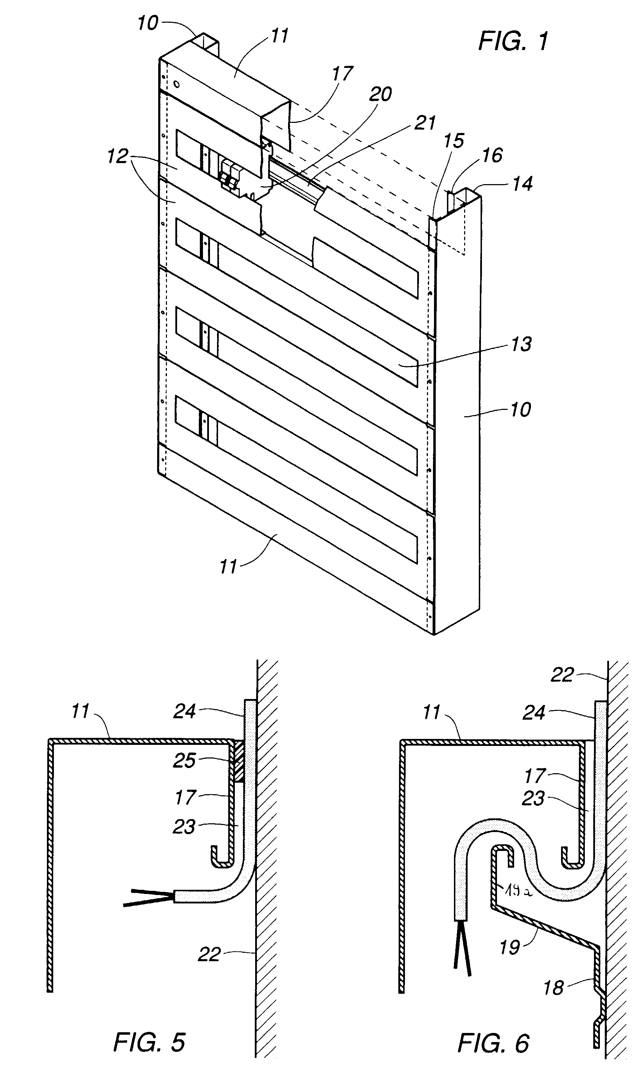

The enclosure design shown in Figures 1-5 is intended for use in dwelling-houses, offices, etc. (dry rooms) and fulfils the requirements for enclosure class IP 20.

The enclosure according to Figure 1 is made of sheet metal and consists of two side panels 10, an upper and a lower end panel 11, and a number of front panels 12 in which rectangular holes 13 are provided for, for example, protective elements 20, for example in the form of midget circuit breakers (so-called automatic fuses). The side panels 10 are bent so as to form a rear plane base portion 14, intended to be fixed to a mounting surface, a front fixing edge 15 for the front panels 12, and an inner fixing edge 16 for supporting bars 21 for the protective elements 20. The end panels 11 are designed with a bent-in edge portion 17 spaced from the rear plane defined by the base portions 14.

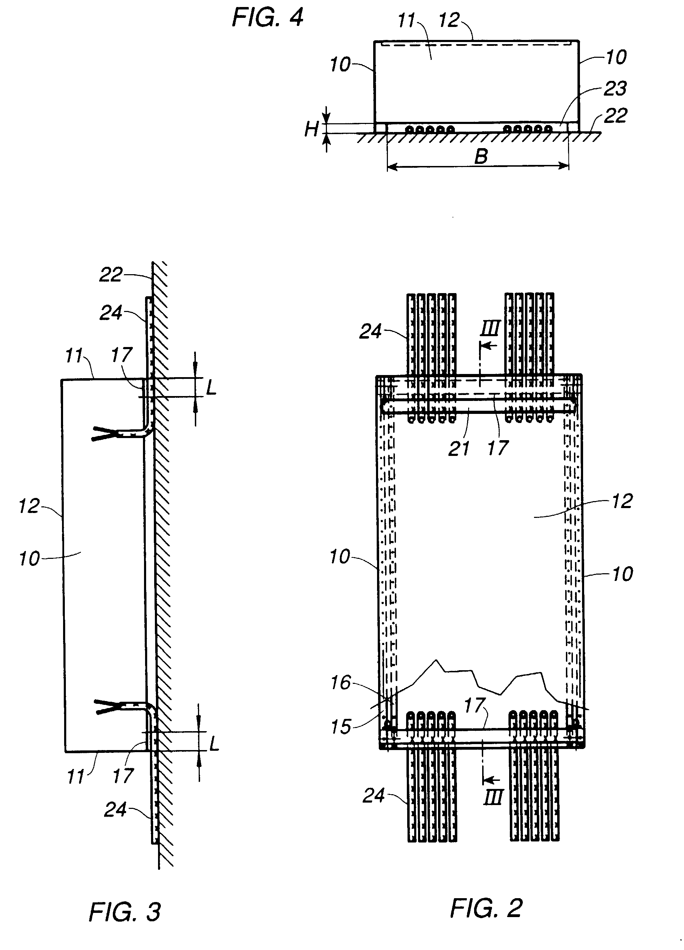

The enclosure according to Figures 2-5 is designed with a whole front panel 12, but otherwise does not differ from the enclosure according to Figure 1. The enclosure is fixed to a mounting surface 22 in the form of a wall, whereby cable inlet openings in the form of gap-like tunnels 23 are formed between the mounting surface and the bent-in edge portions 17 of the two end panels 11. The height of the tunnel (H in Fig. 4) is determined by the largest thickness of incoming and outgoing cables 24 occurring, whereas the length of the tunnel (L in Fig. 3) is adapted such that the requirement for enclosure class IP 2X is fulfilled. This is achieved if the tunnel length L is not significantly smaller than the maximum depth of penetration of the above-mentioned test finger, which depth in turn is dependent on the tunnel height H. For a tunnel height H of 12 mm or less, only the tip of the test finger may penetrate into the tunnel, the length of which may therefore be relatively short, for example 20 mm. If the tunnel height is larger than 12 mm but smaller than 20 mm, the maximum depth of penetration of the test finger is 80 mm, and for a tunnel height larger than 20 mm, the maximum depth of penetration is 180 mm.

As shown in Figure 4, the width B of the tunnel opening may extend over approximately the entire distance between the two side panels 10. Tunnels may possibly be arranged also between the side panels 10 and the mounting surface 22.

In the tunnel opening 23 (Fig. 5), a soft rubber moulding 25 is arranged to seal against dust. The rubber moulding is fixed to the folded-in edge portion 17 of the end panel. In this edge portion ("the tunnel roof"), brackets for relieving tensile strain on the cables may also be fixed.

The enclosure need not necessarily be fixed to a mounting surface in the form of a wall but may also be mounted on, for example, a stand. In this case, the enclosure is provided with a rear panel wall of its own replacing the mounting wall.

Figure 6 shows how, in an enclosure according to the invention, the cable inlet can be arranged such that the enclosure becomes water-repellent and fulfils the requirements for enclosure class IP 43. The enclosure design described with reference to Figures 1-5 is then supplemented by a rear panel 18, which is mounted to the mounting surface 22 and the upper edge portion 19 of which is bent so as to form a labyrinth towards the folded-in edge portion 17 of the end panel. The inserted cable 24 thereby forms an S-curve, thus preventing water from accompanying the cable into the enclosure. The inwardly bent edge portion 19 is at the same time arranged such that water cannot splash into the enclosed space, for example, by bending its end portion 19a upwards. The panel edges which are passed by the cables are bent with a certain radius of curvature such that the cable insulation may not be damaged.

The end panels 11 may advantageously be mounted after the drawing of the cables is completed, which facilitates the mounting.

The supporting bars for the electric material may alternatively be supported by two separate, vertical bars fixed to the mounting surface, these latter bars then replacing the rear bent portion of the side panels 10. The front 12 of the enclosure and the side and end panels 10, 11 can thus be integrated into an enclosure housing which is fixed to the above-mentioned vertical bars when the cable connection to the equipment has been completed.

The folded-in edge portion 17 need not necessarily be parallel to the mounting surface, but may also be obliquely directed in relation thereto.

## Claims

1. An enclosure for live electric material, such as a cubicle or a box, provided with a front wall (12), side walls (10) and an upper and lower end wall (11) and adapted to be mounted to a mounting surface (22) or, equipped with a rear wall of its own, to any other supporting structure, **characterized** in that at least one of the end walls (11) or the side walls (10) exhibits an edge portion (17), folded in at a distance from the mounting surface or said rear wall of its own, respectively, to form a tunnel (23) through which cables (24) may be inserted, the tunnel (23) having a length (L) which is not significantly smaller than the maximum depth of penetration of a standard test finger thus making the enclosure fulfilling the requirements according to the standard regarding semi-protection.

2. An enclosure according to claim 1, **characterized** in that said edge portion (17) supports members for relieving tensile strain on the cables (24).

3. An enclosure according to claim 1 or 2, **characterized** in that a moulding (25) of rubber or a rubber-like material, intended for sealing, is mounted between the mounting surface (22) or the rear wall of the enclosure, respectively, and the folded-in edge portion (17).

4. An enclosure according to any of the preceding claims, **characterized** in that it comprises a separate rear panel (18), the edge portion (19) of which, adjoining said tunnel (23), is bent so as to form a water-repellent labyrinth.

5. An enclosure according to any of the preceding claims, **characterized** in that the tunnel is so shaped that the ratio (L/H) between its length (L) and its height (H) lies between 1.5 and 9.

## Patentansprüche

1. Verkleidung einer unter elektrischer Spannung stehenden Einrichtung, beispielsweise in Gestalt einer Schaltzelle oder eines Kastens, welche Verkleidung eine Vorderwand (12), Seitenwände (10) und eine obere und eine untere Stirnwand (11) hat und die an einer Befestigungsgfläche (22) oder mit einer eigenen Rückwand an einer anderen Trageinrichtung montiert werden kann, **dadurch gekennzeichnet,** daß mindestens eine der Stirnwände (11) oder der Seitenwände (10) einen Endabschnitt (17) hat, der in einem Abstand von der Befestigungsgfläche beziehungsweise der genannten eigenen Rückwand derart nach innen gefaltet ist, daß ein Tunnel (23) entsteht, durch welchen Kabel (24) eingeführt werden können, wobei der Tunnel (23) eine Länge (L) hat, die nicht wesentlich kleiner ist als die maximale Eindringtiefe eines Standard-Testfingers, wodurch die Verkleidung die Standardanforderungen hinsichtlich des Halbschutzes erfüllt.

2. Verkleidung nach Anspruch 1, **dadurch gekennzeichnet**, daß der genannte Endabschnitt (17) Glieder zur Zugentlastung der Kabel (24) trägt.

3. Verkleidung nach Anspruch 1 oder 2, **dadurch gekennzeichnet,** daß ein zum Dichten bestimmtes Formstück (25) aus Gummi oder einem gummiartigen Material zwischen der Befestigungsgfläche (22) beziehungsweise der Rückwand der Verkleidung und dem nach innen gefalteten Endabschnitt (17) angebracht ist.

4. Verkleidung nach einem der vorhergehenden Ansprüche, **dadurch gekennzeichnet,** daß sie eine separate Rückwand (18) hat, deren Randabschnitt (19), der dem genannten Tunnel (23) benachbart ist, derart gebogen ist, daß er ein wasserabweisendes Labyrinth bildet.

5. Verkleidung nach einem der vorhergehenden Ansprüche, **dadurch gekennzeichnet,** daß der Tunnel so geformt ist, daß das Verhältnis (L/H) zwischen seiner Länge (L) und seiner Höhe (H) zwischen 1,5 und 9 liegt.

## Revendications

1. Coffret pour matériels électriques en charge, tel qu'un boîtier ou une boîte, muni d'une paroi (12) avant, de parois (10) latérales et d'une paroi (11) d'extrémité supérieure et inférieure et conçu pour être monté sur une surface (22) de montage ou, équipé d'une paroi arrière qui lui est propre, sur toute autre structure de support, caractérisé en ce qu'au moins l'une des parois (11) d'extrémité ou des parois (10) latérales présente une partie (17) de bord, repliée vers l'intérieur à une certaine distance de la surface de montage ou de la paroi arrière qui lui est propre, respectivement, pour former un tunnel (23) à travers lequel des câbles (24) peuvent être insérés, le tunnel (23) ayant une longueur (L) qui n'est pas notablement inférieure à la profondeur maximale de pénétration d'un doigt de test normalisé, ce qui a pour effet que le coffret satisfait aux exigences de la norme concernant une semi-protection.

2. Coffret suivant la revendication 1, caractérisé en ce que la partie (17) de bord supporte des éléments destinés à réduire la contrainte de traction s'exerçant sur les câbles (24).

3. Coffret suivant la revendication 1 ou 2, caractérisé en ce qu'un moulage (25) de caoutchouc ou d'un matériau caoutchouteux, destiné à assurer l'étanchéité, est monté entre la surface (22) de montage ou la paroi d'extrémité du coffret, respectivement, et la partie (17) de bord repliée vers l'intérieur.

4. Coffret suivant l'une quelconque des revendications précédentes, caractérisé en ce qu'il comprend un panneau (18) arrière séparé dont la partie (19) de bord, adjacente au tunnel (23), est recourbée de façon à former un labyrinthe étanche à l'eau.

5. Coffret suivant l'une quelconque des revendications précédentes, caractérisé en ce que le tunnel est formé de façon que le rapport (L/H) entre sa longueur (L) et sa hauteur (H) se situe entre 1,5 et 9.
